# EUROPÄISCHE PATENTSCHRIFT

(11) **EP 1 322 867 B1**
(45) Veröffentlichungstag und Bekanntmachung des Hinweises auf die Patenterteilung: **23.11.2005**
(21) Anmeldenummer: 01980426.9
(22) Anmeldetag: 21.09.2001
(51) Int. Cl.: F15B 15/14

(54) **HÜLSENARTIGES LAGERTEIL UND DAMIT AUSGESTATTETER ARBEITSZYLINDER**
SLEEVE-TYPE BEARING ELEMENT AND ENGINE CYLINDER EQUIPPED THEREWITH
PIECE D'APPUI DE TYPE MANCHON ET CYLINDRE MOTEUR EQUIPE DE LADITE PIECE

(30) Priorität: 06.10.2000 DE 10049439
(43) Veröffentlichungstag der Anmeldung: 02.07.2003
(73) Patentinhaber: FESTO AG & Co, 73734 Esslingen (DE)
(72) Erfinder: KEES, Ulrich, 66424 Homburg (DE)
(74) Vertreter: Abel, Martin
(86) Internationale Anmeldenummer: PCT/EP2001/010949
(87) Internationale Veröffentlichungsnummer: WO 2002/029291

(56) Entgegenhaltungen:
- EP-A- 0 995 932
- DE-A- 3 616 844
- DE-A- 4 010 953
- DE-C- 3 501 334
- DE-U- 9 415 921

## Beschreibung

Die Erfindung betrifft ein hülsenartiges Lagerteil für die Kolbenstange eines Arbeitszylinders, das in einem Durchgang des Gehäuses des Arbeitszylinders installierbar ist und dessen Kolbenstange koaxial umschließt, wobei es drei Komponenten in Gestalt einer Führungsbüchse, einem am vorderen Endbereich der Führungsbüchse angeordneten ringförmigen Abstreifer und einer am rückwärtigen Endbereich der Führungsbüchse angeordneten ringförmigen Dichtung enthält, die zu einer Baueinheit zusammengefasst sind, wobei der Außenumfang des Lagerteils im Bereich der Führungsbüchse eine tonnenähnlich ausgebauchte Formgebung hat, die es der Führungsbüchse ermöglicht, ihre Position durch Verkippen bezüglich dem Gehäuse an die Ausrichtung der sie durchsetzenden Kolbenstange anzupassen.

Ferner betrifft die Erfindung einen Arbeitszylinder, der ein Gehäuse und eine einen Gehäusedurchgang durchsetzende Kolbenstange aufweist, wobei in dem Gehäusedurchgang ein die Kolbenstange koaxial umschließendes hülsenartiges Lagerteil der vorerwähnten Art angeordnet ist.

In der DE 35 01 334 C1 ist eine Dichtung für ein hin- und hergehendes Maschinenteil beschrieben, die einen ruhend festgelegten Haltering und einem auf dem Haltering abgestützten Führungsring aufweist. Der Führungsring ist kugelig gewölbt und an dem zugeordneten Haltering kippbar gelagert, so dass er entsprechenden Kippbewegungen eines relativ gegenüber dem Haltering bewegbaren Maschinenteils folgen kann. Ferner ist an den Führungsring einenends eine Staublippe und andernends eine Dichtlippe anvulkanisiert, um damit verschiedene Dichtaufgaben zu erfüllen.

Aus der DE 40 10 953 C2 gehen ein hülsenartiges Lagerteil für die Kolbenstange eines Arbeitszylinders sowie ein mit einem derartigen Lagerteil ausgestatteter Arbeitszylinder hervor. Das Lagerteil enthält eine zentral angeordnete Führungsbüchse, die die Kolbenstange mit einer kreiszylindrischen Führungsfläche umschließt und passend in das Gehäuse des Arbeitszylinders eingesteckt ist. Eine rückseitig an der Führungsbüchse angeordnete ringförmige Dichtung verhindert einen Fluidaustritt aus dem Innern des Arbeitszylinders. Ein an der Vorderseite vorgesehener Abstreifer verhindert den Eintritt von Verunreinigungen ins Innere des Arbeitszylinders.

Hülsenartige Lagerteile dieser Art unterliegen meist einem raschen Verschleiß, der auf fehlende Parallelität zwischen den Längsachsen der Kolbenstange und des Gehäuses des Arbeitszylinders zurückzuführen ist. Man hat daher in der DE 34 43 725 C2 bereits eine die Führungsbüchse umschließende gummielastische Manschette vorgeschlagen, die eine elastische Aufhängung der Führungsbüchse bewirkt. Um hiermit jedoch nicht nur einen Parallelversatz zwischen den Längsachsen der Kolbenstange und des Gehäuses auszugleichen, sondern auch Unparallelitäten bzw. Verkippungen derselben, muss die elastische Schicht relativ dick sein. Dies hat aber zur Folge, dass die Führungsbüchse relativ labil aufgehängt ist und der gewünschten Führungsfunktion nur unzureichend nachkommen kann.

Es ist die Aufgabe der vorliegenden Erfindung, Maßnahmen zu treffen, die eine Kompensation von Unparallelitäten zwischen der Kolbenstange und dem Gehäuse eines Arbeitszylinders ermöglichen und trotzdem eine gute Führungsqualität und eine einfache Montage und Demontage gewährleisten.

Gelöst wird diese Aufgabe mit einem hülsenartigen Lagerteil für die Kolbenstange eines Arbeitszylinders, das im installierten Zustand in einem Durchgang des Gehäuses des Arbeitszylinders sitzt und dessen Kolbenstange koaxial umschließt, und das drei Komponenten in Gestalt einer Führungsbüchse, einem am vorderen Endbereich der Führungsbüchse angeordneten ringförmigen Abstreifer und einer am rückwärtigen Endbereich der Führungsbüchse angeordneten ringförmigen Dichtung enthält, die zu einer Baueinheit zusammengefasst sind, wobei der Außenumfang des Lagerteils im Bereich der Führungsbüchse eine tonnenähnlich ausgebauchte Formgebung hat, die es der Führungsbüchse ermöglicht, ihre Position durch Verkippen bezüglich dem Gehäuse an die Ausrichtung der sie durchsetzenden Kolbenstange anzupassen und wobei Befestigungsmittel zur gehäuseseitigen Fixierung im Rahmen eines Steck-Dreh-Vorganges vorgesehen sind, die über ein oder mehrere, radial nach außen abstehende Befestigungsvorsprünge verfügen, die bei installiertem Lagerteil in einen am Innenumfang des Gehäusedurchganges vorgesehenen Befestigungsschlitz eingreifen.

Somit hat das Lagerteil im Bereich der Führungsbüchse einen balligen Außenumfang, der relativ zum Gehäusedurchgang des Arbeitszylinders Kippbewegungen um quer zur Längsachse des Gehäusedurchgangs verlaufende Kippachsen ermöglicht. Die Führungsbüchse kann sich daher stets an die Längsausrichtung der sie durchsetzenden Kolbenstange anpassen, so dass übermäßiger Verschleiß der Führungsfläche und der Außenfläche der Kolbenstange vermieden wird. Auf diese Weise werden Fertigungs- und Montagetoleranzen kompensiert und eine hohe Lebensdauer des Lagerteils gewährleistet. Das Ganze in Verbindung mit einer einfachen Montage bzw. Demontage des Lagerteils, da dessen Komponenten zu einer einheitlich handhabbaren Baueinheit zusammengefasst sind und sich das Lagerteil trotz der Vielzahl unterschiedlicher Komponenten wie ein einziges Bauteil handhaben lässt.

Ein mit einem derartigen Lagerteil ausgestatteter Arbeitszylinder zeichnet sich ebenfalls durch eine hohe Lebensdauer aus, wobei Betriebsunterbrechungen zum Zwecke des Austausches einer verschlissenen Führungsbüchse anzahlmäßig stark reduziert sind.

Vorteilhafte Weiterbildungen der Erfindung gehen aus den Unteransprüchen hervor.

Der Außendurchmesser der Führungsbüchse und der Innendurchmesser des diese aufnehmenden Längenabschnittes des Gehäusedurchganges sind zweckmäßigerweise so aufeinander abgestimmt, dass die Führungsbüchse radial spielfrei abgestützt wird. Durch eine entsprechende Ausgestaltung des Radius der Ausbauchung kann dies problemlos gewährleistet werden.

Um die zweckmäßigerweise stirnseitig an die Führungsbüchse angesetzte Dichtung sicher zu halten, können an der Dichtung streifenartige Axialfortsätze angeformt sein, die in nutartige Aufnahmevertiefungen im Bereich des Außenumfanges der Führungsbüchse eingreifen. Ein besonders wirksamer, auf Formschlussbasis beruhender Halteeffekt ergibt sich, wenn die Axialfortsätze an ihren der ringförmigen Dichtung entgegengesetzten Endbereichen ebenfalls einstückig mit einem zu der Dichtung koaxialen Ringkörper verbunden sind, wobei der Ringkörper einen oder mehrere Radialvorsprünge der Führungsbüchse hintergreift. Bei diesen Radialvorsprüngen handelt es sich zweckmäßigerweise um zwischen jeweils benachbarten Aufnahmevertiefungen angeordnete Längsrippen der Führungsbüchse.

Bei Bedarf lässt sich durchaus eine schwimmende Aufhängung der Führungsbüchse erzielen, die begrenzt Radialbewegungen zulässt, zu welchem Zweck im Bereich des Außenumfanges der Führungsbüchse aus gummielastischem Material bestehende Ausgleichsmittel vorgesehen sind. Da diese Ausgleichsmittel nur für eine Kompensation des in der Regel äußerst minimalen Parallelversatzes notwendig sind, kann ihre Dicke sehr gering gehalten werden, so dass die Führungsbüchse weiterhin eine gute Querabstützung erfährt, die für eine optimale Führung Voraussetzung ist.

Prinzipiell wäre es möglich, als Ausgleichsmittel einen dünnen gummielastischen Überzug am Außenumfang der Führungsbüchse vorzusehen. Wesentlich vorteilhafter ist jedoch eine Bauform, bei der die Ausgleichsmittel von über den Umfang der Führungsbüchse verteilten und zueinander parallelen länglichen Ausgleichsstreifen gebildet sind, die bei entsprechender Ausgestaltung des Lagerteils unmittelbar von den streifenförmigen Axialfortsätzen der Dichtung gebildet sein können.

Das Lagerteil ist so ausgebildet, dass es sich allein im Rahmen eines Steck-Dreh-Vorganges im Gehäusedurchgang des zugeordneten Arbeitszylinders fixieren lässt. Es kann somit auf separat handhabbare Befestigungsmittel, beispielsweise Sicherungsringe, verzichtet werden.

Die Befestigungsmittel enthalten ein oder mehrere in Umfangsrichtung des Lagerteils verteilte und radial nach außen abstehende Befestigungsvorsprünge, die bei installiertem Lagerteil von radial innen her in einen am Innenumfang des Gehäusedurchganges vorgesehenen Befestigungsschlitz eingreifen. Insbesondere wenn die Befestigungsvorsprünge feste Bestandteile der Führungsbüchse sind, ist dabei ausreichend axiales Bewegungsspiel gegeben, um die mögliche Kippbewegung der Führungsbüchse nicht zu beeinträchtigen.

Zur Sicherung des installierten Lagerteils können die Befestigungsmittel zusätzlich Sicherungsmittel aufweisen, die zur Sicherung der Drehposition bezüglich des Gehäuses dienen. Es kann sich um Sicherungsmittel handeln, die im Rahmen einer Rastverbindung mit dem Gehäuse zusammenwirken. Damit gehäuseseitig jedoch der Herstellungsaufwand möglichst gering ist, empfiehlt sich eine Ausgestaltung der Sicherungsmittel derart, dass ausschließlich eine kraftschlüssige Fixierung erreicht wird, insbesondere durch eine federelastische Vorspannung.

Sämtliche Komponenten des Lagerteils sind zweckmäßigerweise stoffschlüssig miteinander verbunden. Sie sind insbesondere durch Spritzgießen aneinander angeformt, so dass man von einem Dreikomponenten-Spritzgussteil sprechen kann. Beim Spritzgießen selbst wird zweckmäßigerweise auf zusätzliche chemische Verbindungsmittel zwischen den einzelnen Materialien verzichtet. Möglich ist dies durch die Verwendung von Werkstoffen, die eine hohe Affinität zueinander haben und bei hohen Temperaturen verarbeitet werden. Der stoffschlüssige Verbindungsvorgang zwischen den einzelnen Materialen kann beispielsweise auf einem physikalischen Verschmelzungsprinzip oder auf einem chemischen Verklebungsprinzip basieren.

Nachfolgend wird die Erfindung anhand der beiliegenden Zeichnung näher erläutert. In dieser zeigen:
- Figur 1: den lagerdeckelseitigen Endabschnitt eines durch Fluidkraft und insbesondere pneumatisch betätigbaren Arbeitszylinders, wobei der Lagerdeckel aufgebrochen ist, so dass man das hülsenartige Lagerteil und die dieses durchsetzende Kolbenstange sehen kann,
- Figur 2: die Anordnung aus Figur 1 aus einem Blickwinkel von der Rückseite des Lagerdeckels her gesehen,

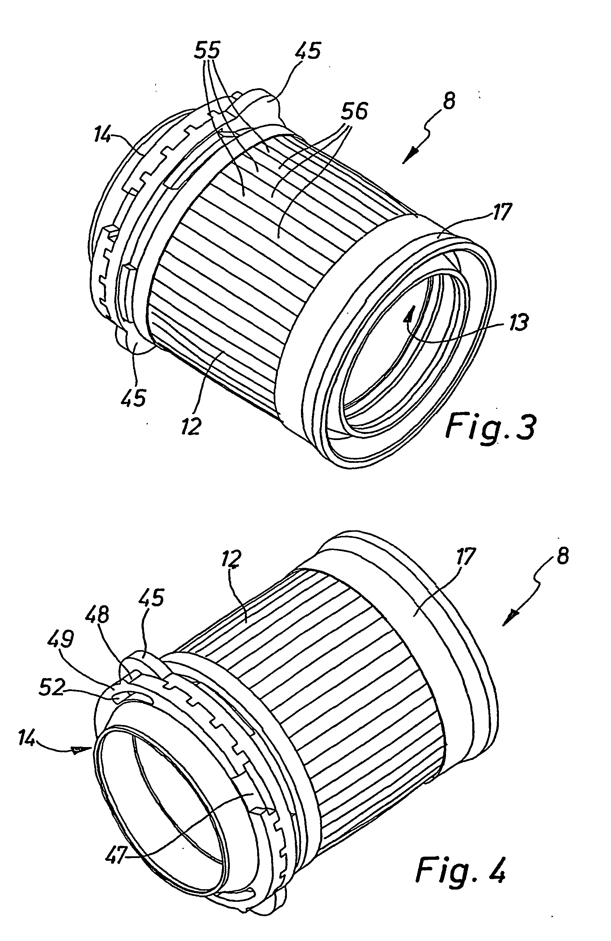

- Figuren 3 und 4: verschiedene perspektivische Darstellungen des Lagerteils,
- Figur 5: eine Stirnansicht des Arbeitszylinders der Figuren 1 und 2 mit Blickrichtung gemäß Pfeil V aus Figuren 1 und 6,
- Figur 6: einen Längsschnitt gemäß Schnittlinie VI-VI aus Figur 1, wobei die Bestandteile des Gehäuses und der Kolbenstange nur strichpunktiert angedeutet sind,
- Figur 7: einen Querschnitt durch das hülsenartige Lagerteil gemäß Schnittlinie VII-VII aus Figur 6,
- Figur 8: eine Einzeldarstellung des ringförmigen Abstreifers in Seitenansicht,
- Figur 9: einen Längsschnitt durch die Führungsbüchse in Alleindarstellung, und
- Figur 10: eine Einzelabbildung der ringförmigen Dichtung einschließlich eines beabstandeten Ringkörpers mit sich dazwischen stegartig erstreckenden streifenartigen Axialfortsätzen.

Der in der Zeichnung nur partiell abgebildete Arbeitszylinder 1 wird durch Fluidkraft betätigt, wobei es sich insbesondere um einen Pneumatikzylinder handelt.

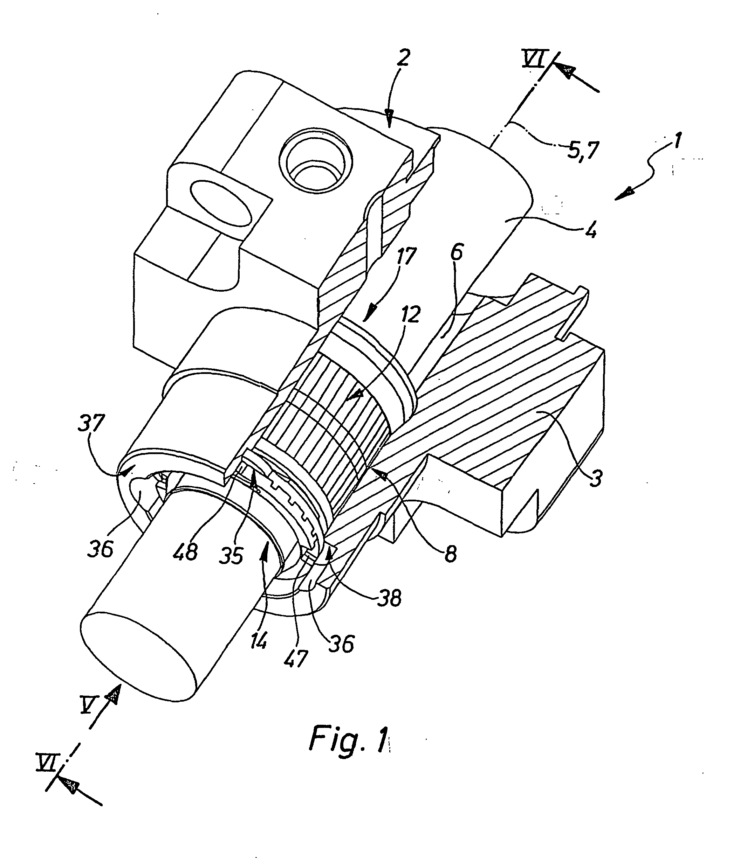

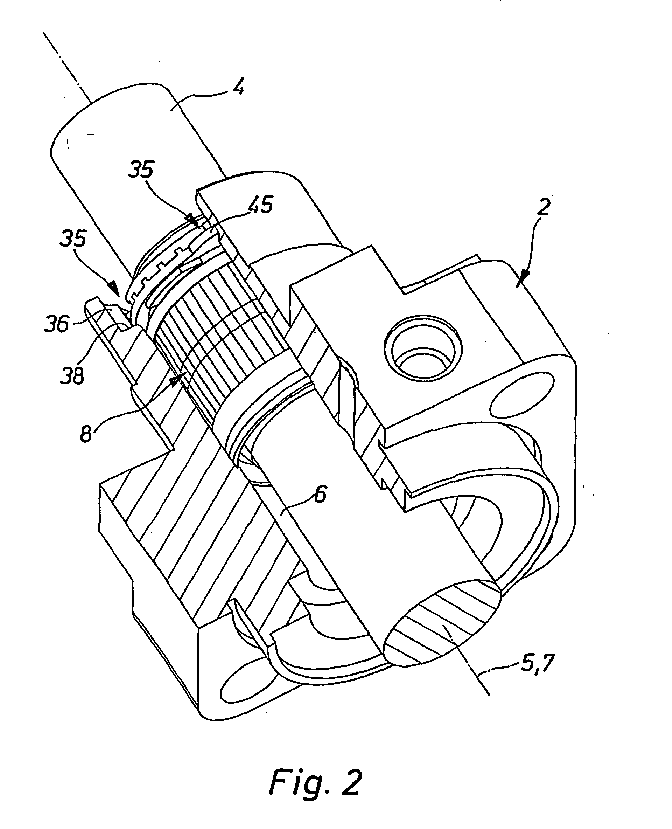

Der Arbeitszylinder 1 verfügt über ein allgemein mit Bezugsziffer 2 bezeichnetes Gehäuse, von dem in Figuren 1 und 2 1e-diglich der Lagerdeckel 3 abgebildet ist, der von der Kolbenstange 4 des Arbeitszylinders 1 durchsetzt wird.

Die Kolbenstange 4 steht mit einem im Innern des Arbeitszylinders 1 axial verschiebbar angeordneten Kolben in Verbindung (nicht dargestellt) und kann durch Fluidbeaufschlagung dieses Kolbens zu einer Linearbewegung in Richtung ihrer Längsachse 5 veranlasst werden. Diese Linearbewegung kann an dem außerhalb des Gehäuses 2 befindlichen Abschnitt der Kolbenstange 4 abgegriffen werden, um einen beliebigen Gegenstand zu bewegen.

Die Kolbenstange 4 durchsetzt einen im Lagerdeckel 3 ausgebildeten Gehäusedurchgang 6, wobei ihre Längsachse 5 idealerweise mit der Längsachse 7 des Gehäusedurchganges 6 zusammenfällt.

Im Innern des Gehäusedurchganges 6 sitzt ein hülsenartiges Lagerteil 8, das die Kolbenstange 4 koaxial umschließt. Es ist im Innern des Gehäusedurchganges 6 axial unbeweglich gehäusefest fixiert. Im Betrieb des Arbeitszylinders 1 verschiebt sich die Kolbenstange 4 relativ zu dem Lagerteil 8.

Das Lagerteil 8 verfügt über drei Komponenten, die unterschiedliche Aufgaben übernehmen. Eine erste Komponente ist eine hülsenartig ausgebildete Führungsbüchse 12, die beispielsweise aus einem Bronze-Kunststoff-Gemisch oder aus, einem Hartkunststoff, beispielsweise sogenanntes Teflon (eingetragenes Warenzeichen), besteht. Die Führungsbüchse 12 besitzt am Innenumfang eine kreiszylindrische Führungsfläche 13, die die Kolbenstange 4 mit Führungskontakt ringsum umschließt.

Eine zweite Komponente ist von einem ringförmigen Abstreifer 14 gebildet, der am einen axialen Endbereich der Führungsbüchse 12 befestigt ist. Zur besseren Unterscheidung soll dieser Endbereich nachfolgend als vorderer Endbereich 15 bezeichnet sein.

Am entgegengesetzten rückwärtigen Endbereich 16 der Führungsbüchse 12 ist als dritte Komponente eine ringförmige Dichtung 17 angebracht.

Die vorerwähnten drei Komponenten 12, 14 und 17 sind koaxial zueinander angeordnet und definieren gemeinsam die Längsachse 18 des hülsenartigen Lagerteils 8.

Vorzugsweise durch Spritzgießen oder durch andere, eine stoffschlüssige Verbindung herstellende Verfahren, sind die drei Komponenten 12, 14, 17 einstückig zu einer Baueinheit verbunden, die sich wie ein einziges Bauteil handhaben lässt. Bei der Montage oder Demontage des Lagerteils 8 muss also nur ein einziges Teil gehandhabt werden, was Zeit und Kosten spart.

Die ringförmige Dichtung 17 verhindert einen Fluidaustritt aus dem sich innen an den Gehäusedurchgang 6 anschließenden Arbeitsraum des Arbeitszylinders 1, indem sie sowohl mit dem Gehäuse 2 als auch mit der Kolbenstange 4 dichtend zusammenarbeitet. Hierzu besteht sie aus einem Material mit gummielastischen Eigenschaften, insbesondere einem Elastomermaterial. Sie ist bevorzugt als Lippendichtung ausgebildet, wobei sie eine mit dem Außenumfang der Kolbenstange 4 dynamisch dichtend zusammenarbeitende innere Dichtlippe 22 sowie eine diese außen konzentrisch umschließende, mit der Innenumfangsfläche 23 des Gehäusedurchgangs 6 statisch dichtend zusammenarbeitende äußere Dichtlippe 24 aufweist. Ausgehend von einem ringförmigen Basisabschnitt 25, der an die rückwärtige Stirnfläche der Führungsbüchse 12 angeformt ist, ragen die beiden Dichtlippen 24, 25 schräg nach radial innen bzw. nach radial außen und in Richtung zum abzudichtenden Arbeitsraum.

Der Abstreifer 14 dient dazu, an dem außerhalb des Gehäuses 2 befindlichen Längenabschnitt der Kolbenstange 4 anhaftende flüssige oder feste Verunreinigungen abzustreifen, wenn die Kolbenstange 4 in das Gehäuse 2 einfährt. Der Abstreifer 14 hat einen ringförmigen Halteabschnitt 26, mit dem er an die vordere Stirnfläche der Führungsbüchse 12 angeformt ist und von dem aus eine die Kolbenstange 4 umschließende Abstreiflippe 27 kragenartig zur axialen Außenseite des Gehäusedurchganges 6 hin wegragt.

Der Abstreifer 14 besteht zweckmäßigerweise aus einem Kunststoffmaterial, das jedoch härter ist als das Material der Dichtung 17, so dass die gewünschte Abstreiffunktion erfüllt wird.

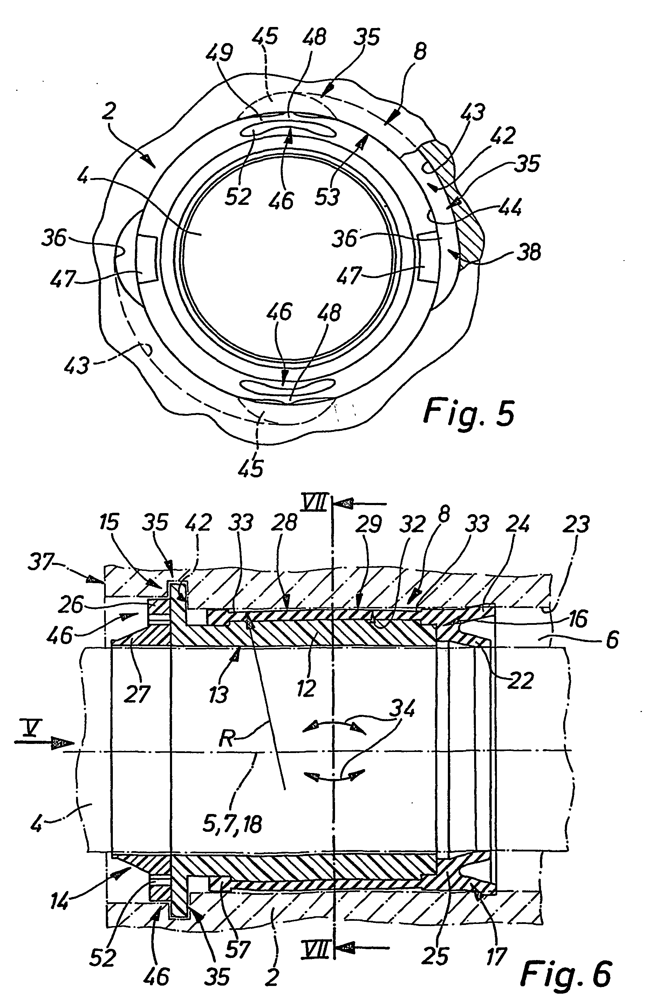

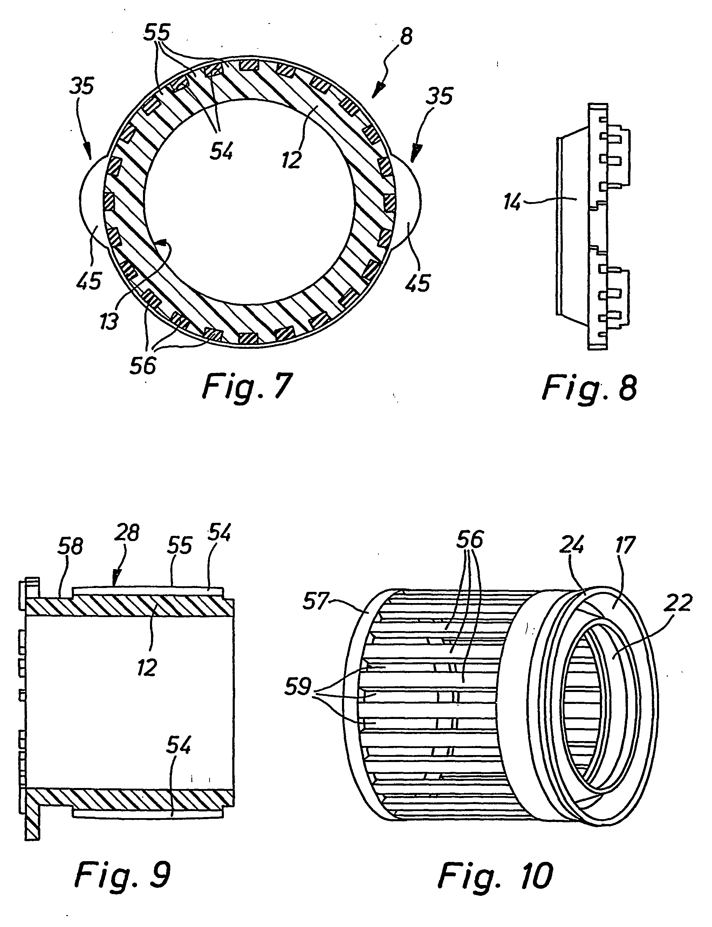

Als besonderes Merkmal ist der Außenumfang des hülsenartigen Lagerteils 8 im Bereich der Führungsbüchse 12 mit einer tonnenähnlich ausgebauchten Formgebung versehen. Im Längsschnitt gemäß Figuren 6 und 9 gesehen, hat die Führungsbüchse 12 im betreffenden Bereich - nachfolgend als Kompensationsbereich 28 bezeichnet - eine leicht ausgewölbte Kontur, die auf Grund ihrer Geringfügigkeit in der Zeichnung kaum erkennbar ist.

Fällt die Längsachse 18 des Lagerteils 8 mit der Längsachse 7 des Gehäusedurchganges 6 zusammen, kontaktiert lediglich ein axial mittiger Zentralabschnitt 29 des Kompensationsbereiches 28 die Innenumfangsfläche 23 des Gehäusedurchganges 6. Der Außendurchmesser des Zentralabschnittes 29 entspricht also dem Innendurchmesser des Gehäusedurchganges 6 in dem die Führungsbüchse 12 aufnehmenden Längenabschnitt 32. Eine Folge hiervon ist, dass das Lagerteil 8 mit seiner Führungsbüchse 12 radial spielfrei in den Gehäusedurchgang 6 einsitzen kann.

Bei einer derartigen Idealposition ergeben sich axial beidseits des Zentralabschnittes 29 ringförmige Zwischenräume 33 zwischen der Innenumfangsfläche 23 und dem Kompensationsbereich 28. Die radialen Abmessungen dieser Zwischenräume 33 werden mit zunehmender Entfernung vom Zentralabschnitt 29 größer, eben bedingt durch die ballige Formgebung der Führungsbüchse 12, sind jedoch insgesamt sehr gering.

Die erwähnte Gestaltung hat vorteilhafte Auswirkungen auf das Toleranzausgleichsverhalten des Lagerteils 8. Es ist nämlich der Führungsbüchse 12 dadurch möglich, ihre bezüglich dem Gehäuse 2 bzw. dem Gehäusedurchgang 6 eingenommene Position durch Verkippen an die Ausrichtung der die Führungsbüchse 12 durchsetzenden Kolbenstange 4 anzupassen. Bestehende Kippmöglichkeiten sind in Figur 6 durch Doppelpfeile 34 angedeutet, wobei die möglichen Kippachsen quer zur Längsachse 7 des Gehäusedurchganges 6 verlaufen und diese Längsachse vorzugsweise rechtwinkelig schneiden. Die Kippachsen können dabei beliebig in einer zu der Längsachse 7 rechtwinkeligen Ebene ausgerichtet sein.

Beim Verkippen werden die ringförmigen Zwischenräume 33 je nach Kipprichtung in ihren radialen Abmessungen vergrößert bzw. verkleinert, wobei der in Figur 6 angedeutete Bogenradius R des tonnenartig ausgebauchten Außenumfanges zweckmäßigerweise so gewählt ist, dass die Führungsbüchse 12 ungeachtet der momentanen Kipplage stets radial spielfrei im Gehäusedurchgang 6 gehalten ist.

Durch die ballige Außenkontur des Lagerteils 8 im Bereich der Führungsbüchse 12 ist das Lagerteil mithin in der Lage, selbsttätig eine Toleranzkompensation vorzunehmen, wenn auf Grund von Herstellungs- und Montagetoleranzen die Längsachse 5 der Kolbenstange 4 nicht exakt parallel zur Längsachse 7 des Gehäusedurchganges 6 verlaufen sollte. Die Führungsbüchse 12 kann sich dann entsprechend dem Längsverlauf der Kolbenstange 4 geringfügig bezüglich dem Gehäuse 2 verschwenken, so dass die Längsachse 18 des Lagerteils 8 stets mit der Längsachse 5 der Kolbenstange 4 zusammenfällt und im Kontaktbereich zwischen der Führungsfläche 13 und der Außenfläche der Kolbenstange 4 kein erhöhter Verschleiß auftritt.

Das Lagerteil 8 befindet sich im installierten Zustand zweckmäßigerweise komplett innerhalb des Gehäusedurchganges 6. Es ist dort in der gewünschten Position ausschließlich durch Befestigungsmittel 35 gehalten, die unmittelbar zwischen dem Lagerteil 8 und dem Gehäuse 2 wirksam sind. Die Verwendung zusätzlicher, separater Befestigungselemente wie Schrauben, Stifte oder Sicherungsringe ist nicht vorgesehen.

Die Befestigungsmittel 35, deren bevorzugter Aufbau und Wirkungsweise aus Figur 5 gut ersichtlich ist, ermöglichen die gehäuseseitige Fixierung des Lagerteils 8 im Rahmen einer Renkverbindung, die vorliegend als Steck-Dreh-Verbindung ausgeführt ist. Das Lagerteil 8 kann bei bereits eingebauter, den Gehäusedurchgang 6 durchsetzender Kolbenstange 4 über das äußere Ende der Kolbenstange 4 hinweg auf letztere aufgesteckt werden. Anschließend wird es in Richtung zum Gehäuse 2 verschoben und im Rahmen eines linearen Steckvorganges koaxial bis zum Erreichen der gewünschten Einbautiefe in den Gehäusedurchgang 6 eingeführt. Anschließend wird das gesamte Lagerteil 8 um seine Längsachse 18 verdreht, um die Axialposition bezüglich dem Gehäuse 2 zu sichern. Die Deinstallation des Lagerteils 8 erfolgt mit umgekehrtem Bewegungsablauf.

Zur Realisierung dieses Steck-Dreh-Vorganges ist das Gehäuse 2 am äußeren Endabschnitt des Gehäusedurchganges 6 mit zwei in dessen Innenumfangsfläche 23 eingebrachten Aussparungen 36 versehen, die auch zu der äußeren Stirnfläche 37 des Gehäuses 2 hin offen sind, zu der der Gehäusedurchgang 6 ausmündet. Die Aussparungen 36 liegen einander vorzugsweise diametral gegenüber.

Axial innen ist jede Aussparung 36 von einer Anschlagfläche 38 begrenzt, die in die innere Schlitzflanke 42 eines bogenförmigen Schlitzes 43 übergeht, der sich ausgehend von einer jeweiligen Aussparung 36 ein Stück weit in Umfangsrichtung des Gehäusedurchganges 6 erstreckt. Die längsseitige Schlitzöffnung 44 befindet sich an der Innenumfangsfläche 23. Beim Ausführungsbeispiel erstreckt sich der Schlitz 43 über einen Bogenwinkel von etwa 45°.

An dem hülsenartigen Lagerteil 8 ist eine der Anzahl der Aussparungen 36 entsprechende Anzahl ohrenartig radial nach außen abstehender Befestigungsvorsprünge 45 vorgesehen. Ihr Verteilungswinkel über den Umfang des Lagerteils 8 hinweg entspricht demjenigen der Aussparungen 36, so dass sie sich beim Ausführungsbeispiel an diametral gegenüberliegenden Stellen des Lagerteils 8 befinden. Bevorzugt handelt es sich bei ihnen wie abgebildet um einstückige Bestandteile der Führungsbüchse 12, wobei sie sich am vorderen Endbereich 15 der Führungsbüchse 12 befinden.

Das Einstecken des Lagerteils 8 erfolgt in einer Drehwinkellage, bei der jeder Befestigungsvorsprung 45 einer der Aussparungen 36 zugeordnet ist. Beim Steckvorgang tauchen die Befestigungsvorsprünge 45 axial in die Aussparungen 36 ein, bis sie an der Anschlagfläche 38 zur Anlage gelangen. Damit ist die Einstecktiefe des Lagerteils 8 vorgegeben. Anschließend wird das Lagerteil 8 verdreht, so dass die Befestigungsvorsprünge 45 in den jeweils zugeordneten bogenförmigen Schlitz 43 eintauchen und zwischen dessen beiden Schlitzflanken axial gefangen sind. Dabei ist die Breite der bogenförmigen Schlitze 43 und der Befestigungsvorsprünge 45 so aufeinander abgestimmt, dass ein geringfügiges Axialspiel vorliegt, das der Führungsbüchse 12 weiterhin die gewünschte Kippbewegung gestattet.

Die Anzahl der Aussparungen 36 und Befestigungsvorsprünge 45 kann bei Bedarf auch weniger oder mehr als zwei Stück betragen.

Der Drehvorgang des Lagerteils 8 kann problemlos mit einem handbetätigten Werkzeug erfolgen, das sich von der Vorderseite des Lagerteils 8 her an einer oder mehreren, beispielsweise von Vertiefungen gebildeten Werkzeugangriffspartien 47 ansetzen lässt.

Zur Positionssicherung des Lagerteils 8 im installierten Zustand verfügen die Befestigungsmittel 35 des Weiteren über geeignete Sicherungsmittel 46. Sie sind so ausgebildet, dass sich mit ihnen die Drehposition des installierten Lageteils 8 fixieren lässt und die Befestigungsvorsprünge 45 an einem Wandern innerhalb des Schlitzes 43 zur zugeordneten Aussparung 36 gehindert werden.

Die Sicherungsmittel 46 sind beim Ausführungsbeispiel so ausgeführt, dass sie eine Verdrehsicherung des Lagerteils 8 allein auf kraftschlüssiger Basis bewirken. Sie bestehen beim Ausführungsbeispiel aus zwei radial nach außen weisenden Nasen 48, die im mittleren Bereich eines Steges 49 vorgesehen sind, der dadurch realisiert ist, dass im radial außen liegenden Bereich des Halteabschnittes 26 des Abstreifers 27 an der entsprechenden Stelle ein axial durchgehender bogenförmiger Längsschlitz 52 eingebracht ist. Der Steg 48 bildet die radial nach außen weisende Begrenzungswand dieses Längsschlitzes 52.

Obgleich das Abstreifermaterial relativ steif ist, verfügt es doch über ausreichende Elastizität, um bei von radial außen her erfolgender Beaufschlagung einer Nase 48 eine elastische Verformung des zugeordneten Steges 49 nach radial innen hin zuzulassen. Dabei verringert sich die Schlitzbreite im Bereich der betreffenden Nase 48, wie dies aus Figur 5 hervorgeht.

Die Anordnung ist nun so getroffen, dass am Gehäuse 2 am Innenumfang des Gehäusedurchganges 6 für jede Nase 48 eine Aussparung vorgesehen ist, in die diese eintauchen kann, wenn das Lagerteil 8 in der geschilderten Weise in den Gehäusedurchgang 6 eingeführt wird. Diese Aussparungen sind beim Ausführungsbeispiel mit den Aussparungen 36 für die Befestigungsvorsprünge 45 identisch, was den Herstellungsaufwand reduziert. In diesem Zusammenhang befinden sich die Nasen 48 im Bereich der Befestigungsvorsprünge 45, wobei zweckmäßigerweise jedem Befestigungsvorsprung 45 axial außen eine der Nasen 48 vorgelagert ist.

An jede Aussparung 36 schließt sich eine der Schlitzöffnung 44 axial vorgelagerte Beaufschlagungsfläche 53 an. Deren Abstand zur Längsachse 7 ist geringer als derjenige der Nasen 48. Wird nun das Lagerteil 8 im eingesteckten Zustand verdreht, so untergreifen die Nasen 48 die jeweils zugeordnete Beaufschlagungsfläche 53, wobei sie durch diese nach radial innen gedrückt werden, was die schon erwähnte elastische Verformung der Stege 49 zur Folge hat. Dabei sind die Nasen 48 auf Grund der Elastizität des Abstreifermaterials federnd gegen die jeweilige Beaufschlagungsfläche 53 vorgespannt und bewirken somit eine kraftschlüssige Fixierung der erreichten Drehposition.

Bei Bedarf kann auch eine Rastfunktion verwirklicht werden, so dass die Nasen 48 bei Erreichen der gewünschten Drehposition in eine gehäuseseitige Vertiefung einrasten, was einen zusätzlichen formschlüssigen Sicherungseffekt bewirkt.

Indem am Lagerteil 8 die Befestigungsmittel 35 an der Führungsbüchse 12 und die Drehsicherungsmittel 46 am Abstreifer 14 vorgesehen sind, kann man das Werkstoffverhalten dieser Komponenten vorteilhaft für die gewünschte Funktion ausnutzen.

Um die ringförmige Dichtung 17 sicher an der Führungsbüchse 12 zu haltern, sind zusätzlich zu den stoffschlüssigen Verbindungsmaßnahmen ergänzend formschlüssig wirkende Verbindungsmaßnahmen getroffen.

Wie besonders gut aus Figuren 7 und 9 hervorgeht, ist die Führungsbüchse 12 am Außenumfang mit einer Vielzahl längs verlaufender nutartiger Aufnahmevertiefungen 54 versehen, die über den Umfang der Führungsbüchse 12 verteilt sind, wobei sie mit Abstand parallel zueinander verlaufen. In Umfangsrichtung unmittelbar benachbarte Aufnahmevertiefungen 54 sind somit durch Längsrippen 55 voneinander getrennt.

An der der Führungsbüchse 12 zugewandten Rückseite der Dichtung 17 sind, in einer mit den Aufnahmevertiefungen 54 übereinstimmenden Verteilung, streifenartige Axialfortsätze 56 angeformt, die sich innerhalb der Aufnahmevertiefungen 54 in Richtung zum vorderen Endbereich 15 der Führungsbüchse 12 erstrecken. An ihren der Dichtung 17 entgegengesetzten Endbereichen sind die Axialfortsätze an einen zur ringförmigen Dichtung 17 koaxialen Ringkörper 57 angeformt, der die Führungsbüchse 12 mit axialem Abstand zur vorderen Stirnfläche umschließt. Auf diese Weise erstrecken sich die streifenförmigen Axialfortsätze 56 stegartig zwischen der Dichtung 17 und dem Ringkörper 57, wobei der Ringkörper 57 in eine Umfangsvertiefung 58 der Führungsbüchse 12 eingreift. Diese ist an der der Dichtung 17 zugewandten Seite von über den Umfang verteilten Radialvorsprüngen begrenzt, die von den Längsrippen 55 gebildet sind.

Bedenkt man, dass die Dichtung 17 zusammen mit den Axialfortsätzen 56 und dem Ringkörper 57 für sich allein gesehen ein hülsenähnliches Gebilde gemäß Figur 10 darstellt, und dass die Längsrippen 55 dabei in die schlitzartigen Zwischenräume 59 eintauchen, die von der Dichtung 17, dem Ringkörper 57 und den jeweils benachbarten Axialfortsätzen 56 begrenzt sind, ist offensichtlich, dass der aus Elastomermaterial bestehende Dichtungskörper sicher formschlüssig an der Führungsbüchse 12 gehalten ist.

Zur Erläuterung sei nochmals darauf hingewiesen, dass die einzelnen Bestandteile des Lagerteils 8, obwohl in Figuren 8, 9 und 10 einzeln dargestellt, in der Praxis eine unlösbar verbundene Baueinheit bilden.

Zweckmäßigerweise entspricht der Außendurchmesser des Basisabschnittes 25 der Dichtung 17 sowie des Ringkörpers 57 demjenigen des Zentralabschnittes 29 im Kompensationsbereich 28 der Führungsbüchse 12. Auf diese Weise ist das Lagerteil 8 im installierten Zustand und bei noch nicht eingeführter Kolbenstange gesehen in einer exakten Koaxiallage zum Gehäusedurchgang 6 stabilisiert. Da die Materialien jedoch elastisch verformbar sind, werden dadurch die erwünschten Kippbewegungen nicht beeinträchtigt.

In manchen Fällen kann es zweckmäßig sein, der Führungsbüchse 12 zusätzlich die Möglichkeit zu Querverlagerungen unter Beibehaltung der zwischen ihrer Längsachse und der Längsachse 7 des Gehäusedurchgangs 6 vorhandenen Ausrichtung zu gestatten. Auf diese Weise kann beispielsweise ein geringfügiger Parallelversatz zwischen den Längsachsen der Kolbenstange 4 und des Gehäusedurchganges 6 ausgeglichen werden. Beim Ausführungsbeispiel lässt sich dies besonders einfach dadurch realisieren, dass man die radiale Breite der streifenartigen Axialfortsätze 56 so wählt, dass diese über ihre Länge hinweg geringfügig über die Längsrippen 55 vorstehen. Die überstehenden Bereiche stellen dann längliche Ausgleichsstreifen dar, die auf Grund ihrer gummielastischen Materialbeschaffenheit eine gewünschte schwimmende Lagerung der Führungsbüchse 12 bewirken können. Verglichen mit einer Bauform, bei der die Führungsbüchse 12 komplett von elastischem Material ummantelt ist, ergibt sich ein geringerer Materialverbrauch und es ist außerdem weiterhin ein direkter Kontakt zwischen dem Außenumfang der Führungsbüchse 12 und der Innenumfangsfläche 23 des Gehäusedurchganges 6 gewährleistet.

Bei dem gezeigten Ausführungsbeispiel ist die eben geschilderte schwimmende Aufhängung nicht realisiert. Die Außenflächen der streifenartigen Axialfortsätze 56 verlaufen hier bündig mit den Außenflächen der Längsrippen 55 und tragen zusammen mit diesen zu der tonnenförmig ausgebauchten Umfangsgestaltung bei.

Die erwähnte schwimmende Lagerung, die vorteilhafte Steck-Dreh-Verbindung, die das Verkippen ermöglichenden Maßnahmen und die Zusammenfassung der einzelnen Komponenten zu einer Baueinheit können beliebig kombiniert und auch unabhängig voneinander realisiert werden.

## Patentansprüche

1. Hülsenartiges Lagerteil für die Kolbenstange eines Arbeitszylinders, das in einem Durchgang (6) des Gehäuses (2) des Arbeitszylinders (1) installierbar ist und dessen Kolbenstange (4) koaxial umschließt, und das drei Komponenten in Gestalt einer Führungsbüchse (12), eines am vorderen Endbereich (15) der Führungsbüchse (12) angeordneten ringförmigen Abstreifers (14) und einer am rückwärtigen Endbereich (16) der Führungsbüchse (12) angeordneten ringförmigen Dichtung (17) enthält, die zu einer Baueinheit zusammengefasst sind, wobei der Außenumfang des Lagerteils (8) im Bereich der Führungsbüchse (12) eine tonnenähnlich ausgebauchte Formgebung hat, die es der Führungsbüchse (12) ermöglicht, ihre Position durch Verkippen bezüglich des Gehäuses (2) an die Ausrichtung der sie durchsetzenden Kolbenstange (4) anzupassen, **dadurch gekennzeichnet, dass** Befestigungsmittel (35) zur gehäuseseitigen Fixierung im Rahmen eines Steck-Dreh-Vorganges vorgesehen sind, die über einen oder mehrere, radial nach außen abstehende Befestigungsvorsprünge (45) verfügen, die bei installiertem Lagerteil (8) in einen am Innenumfang des Gehäusedurchganges (6) vorgesehenen Befestigungsschlitz (43) eingreifen.

2. Lagerteil nach Anspruch 1, **dadurch gekennzeichnet, dass** das Lagerteil (8) mit seiner Führungsbüchse (12) radial spielfrei in einem kreiszylindrischen Längenabschnitt des Gehäusedurchganges (6) installierbar ist.

3. Lagerteil nach Anspruch 1 oder 2, **dadurch gekennzeichnet, dass** die Führungsbüchse (12) im Bereich ihres Außenumfanges mit einer Vielzahl längs verlaufender nutartiger Aufnahmevertiefungen (54) versehen ist, die in Umfangsrichtung der Führungsbüchse (12) zueinander beabstandet und parallel zueinander verlaufen und in denen sich streifenartige Axialfortsätze (56) der Dichtung (17) erstrecken.

4. Lagerteil nach Anspruch 3, **dadurch gekennzeichnet, dass** die streifenförmigen Axialfortsätze (56) an ihren der ringförmigen Dichtung (17) entgegengesetzten Endbereichen einstückig mit einem zu der Dichtung (17) koaxialen Ringkörper (57) verbunden sind, wobei sich die Axialfortsätze (56) stegartig zwischen der Dichtung (17) und dem Ringkörper (57) erstrecken und wobei der Ringkörper (57) einen oder mehrere Radialvorsprünge der Führungsbüchse (12) hintergreift, die zweckmäßigerweise von den zwischen benachbarten Aufnahmevertiefungen (54) angeordneten Längsrippen (55) der Führungsbüchse (12) gebildet sind.

5. Lagerteil nach einem der Ansprüche 1 bis 4, **dadurch gekennzeichnet, dass** die Führungsbüchse (12) im Bereich ihres Außenumfanges über aus gummielastischem Material bestehende Ausgleichsmittel verfügt, die bei installiertem Lagerteil eine quer zur Längsachse (7) des Gehäusedurchganges (6) elastisch nachgiebige Aufhängung der Führungsbüchse (12) bewirken.

6. Lagerteil nach Anspruch 5, **dadurch gekennzeichnet, dass** die Ausgleichsmittel zumindest partiell von länglichen Ausgleichsstreifen gebildet sind, die in einer Mehrzahl vorhanden und über den Umfang der Führungsbüchse (12) verteilt sind.

7. Lagerteil nach Anspruch 6, **dadurch gekennzeichnet, dass** die Ausgleichsstreifen von den streifenartigen Axialfortsätzen (56) der Dichtung (17) gebildet sind.

8. Lagerteil nach einem der Ansprüche 1 bis 7, **dadurch gekennzeichnet, dass** die Dichtung (17) eine Lippendichtung ist, die über eine zum Zusammenwirken mit der Kolbenstange (4) vorgesehene innere Dichtlippe (22) und eine zu dieser koaxiale, zum Zusammenwirken mit dem Gehäuse (2) des Arbeitszylinders (1) vorgesehene äußere Dichtlippe (24) verfügt.

9. Lagerteil nach einem der Ansprüche 1 bis 8, **dadurch gekennzeichnet, dass** die Befestigungsvorsprünge (45) als einstückige Bestandteile der Führungsbüchse (12) ausgebildet sind.

10. Lagerteil nach einem der Ansprüche 1 bis 9, **dadurch gekennzeichnet, dass** die Befestigungsmittel (35) über zur Sicherung der Drehposition des installierten Lagerteils (8) dienende Sicherungsmittel (46) verfügen, die vorzugsweise kraftschlüssig mit dem Gehäuse (2) des Arbeitszylinders (1) zusammenarbeiten können.

11. Lagerteil nach einem der Ansprüche 1 bis 10, **dadurch gekennzeichnet, dass** alle Komponenten stoffschlüssig miteinander verbunden und insbesondere durch Spritzgießen aneinander angeformt sind.

12. Lagerteil nach einem der Ansprüche 1 bis 11, **dadurch gekennzeichnet**, das die Führungsbüchse (12), die Dichtung (17) und der Abstreifer (14) aus unterschiedlichen, jeweils auf die zu erfüllende Aufgabe abgestimmten Werkstoffen bestehen, wobei das Lagerteil (8) zweckmäßigerweise als Dreikomponenten-Spritzgussteil ausgebildet ist.

13. Lagerteil nach einem der Ansprüche 1 bis 12, **dadurch gekennzeichnet, dass** die Führungsbüchse (12) aus einem Bronze-Kunststoff-Gemisch oder aus einem Hartkunststoff besteht.

14. Arbeitszylinder, mit einem Gehäuse (2) und einer einen Gehäusedurchgang (6) durchsetzenden Kolbenstange (4), wobei in dem Gehäusedurchgang (6) ein die Kolbenstange (4) koaxial umschließendes hülsenartiges Lagerteil (8) gemäß einem der Ansprüche 1 bis 13 angeordnet ist.

## Claims

1. Sleeve-like bearing part for the piston rod of an operating cylinder, which may be installed in a passage (6) of the housing (2) of the operating cylinder (1) and coaxially encompasses its piston rod (4), and which contains three components in the form of a guide bushing (12), an annular wiper (14) fitted to the front end section (15) of the guide bushing (12), and an annular seal (17) fitted to the rear end section (16) of the guide bushing (12), which are combined to form a unit, wherein the outer periphery of the bearing part (8) has in the area of the guide bushing (12) a barrel-like convex shape which enables the guide bushing (12) to match its position, by tilting relative to the housing (2), to the alignment of the piston rod (4) which passes through it, **characterised in that** fastening means (35) are provided for fixing to the housing side as part of an insert and turn process, and that these have one or more radially outwards-projecting locating projections (45) which, with the bearing part (8) installed, engage in a mounting slot (4) provided on the inner periphery of the housing passage (6).

2. Bearing part according to claim 1, **characterised in that** the bearing part (8) with its guide bushing (12) may be installed, free from radial play, in a circular-cylindrical length section of the housing passage (6).

3. Bearing part according to claim 1 or 2, **characterised in that** the guide bushing (12) is provided in the area of its outer periphery with a multiplicity of longitudinally aligned slot-like mounting recesses (54), spaced apart and parallel to one another in the circumferential direction of the guide bushing (12), and in which there extend strip-like axial projections (56) of the seal (17).

4. Bearing part according to claim 3, **characterised in that** the strip-like axial projections (56) are connected at their end sections opposite the annular seal (17) to an annular body (57) coaxial to the seal (17), wherein the strip-like axial projections (56) extend in a web-like manner between the seal (17) and the annular body (57) and wherein the annular body (57) engages behind one or more radial projections of the guide bushing (12) which are expediently formed by the longitudinal ribs (55) of the guide bushing (12) located between adjacent mounting recesses (54).

5. Bearing part according to any of claims 1 to 4, **characterised in that** the guide bushing (12), in the area of its outer periphery, has compensation means made of rubber-elastic material and which, with the bearing part installed, create an elastic and flexible suspension of the guide bushing (12) at right-angles to the longitudinal axis (7) of the housing passage (6).

6. Bearing part according to claim 5, **characterised in that** the compensation means are formed at least partly by elongated compensation strips which are provided in a large number and are distributed over the periphery of the guide bushing (12).

7. Bearing part according to claim 6, **characterised in that** the compensation strips are formed by strip-like axial projections (56) of the seal (17).

8. Bearing part according to any of claims 1 to 7, **characterised in that** the seal (17) is a lip seal which has an inner seal lip (22) provided for interaction with the piston rod (4), and an outer seal lip (24), coaxial to the inner seal lip, and provided for interaction with the housing (2) of the operating cylinder (1).

9. Bearing part according to any of claims 1 to 8, **characterised in that** the locating projections (45) are designed as integral parts of the guide bushing (12).

10. Bearing part according to any of claims 1 to 9, **characterised in that** the fastening means (35) have securing means (46) serving to secure the rotary position of the installed bearing part (8), which are preferably able to cooperate frictionally with the housing (2) of the operating cylinder (1).

11. Bearing part according to any of claims 1 to 10, **characterised in that** all components are joined to one another by adhesive means and in particular are moulded to one another by injection moulding.

12. Bearing part according to any of claims 1 to 11, **characterised in that** the guide bushing (12), the seal (17) and the wiper (14) are made of materials which are different but are each geared to the task to be performed, with the bearing part (8) expediently being designed as a three-component injection moulding.

13. Bearing part according to any of claims 1 to 12, **characterised in that** the guide bushing (12) is made of a bronze-plastic mixture or of a rigid plastic.

14. Operating cylinder with a housing (2) and a piston rod (4) passing through a housing passage (6), wherein a sleeve-like bearing part (8) coaxially encompassing the piston rod (4) in accordance with any of claims 1 to 13 is located in the housing passage (6).

## Revendications

1. Pièce d'appui de type manchon pour la tige de piston d'un vérin, laquelle peut être installée dans un passage (6) du boîtier du vérin (1) et enferme coaxialement sa tige de piston (4), et qui contient trois composants sous la forme d'une douille de guidage (10), d'une racle (14) de forme annulaire disposée dans la zone d'extrémité avant (15) de la douille de guidage (12), et d'une garniture d'étanchéité (17) de forme annulaire disposée dans la zone d'extrémité arrière (16) de la douille de guidage (12), lesquels sont réunis en une unité de construction, le pourtour extérieur de la pièce d'appui (8) présentant, dans la zone de la douille de guidage (12), une forme bombée de type tonneau qui permet à la douille de guidage (12) d'adapter sa position, par basculement par rapport au boîtier (2), à l'orientation de la tige de piston (4) la traversant, **caractérisée en ce que** sont prévus, pour la fixation côté boîtier, dans le cadre d'une opération à enfichage et rotation, des moyens de fixation (35) qui disposent d'une ou de plusieurs saillies de fixation (45) faisant saillie radialement vers l'extérieur, qui lorsque la pièce d'appui (8) est installée, s'engagent dans une fente de fixation (43) prévue sur le pourtour intérieur du passage de boîtier (6).

2. Pièce d'appui selon la revendication 1, **caractérisée en ce que** la pièce d'appui (8) peut être installée avec sa douille de guidage (12) radialement sans jeu dans un tronçon de longueur cylindrique circulaire du passage de boîtier (6).

3. Pièce d'appui selon la revendication 1 ou 2, **caractérisée en ce que** la douille de guidage (12) est pourvue, dans la zone de son pourtour extérieur, d'un grand nombre de renfoncements de réception (54) de type rainure, s'étendant longitudinalement, qui sont espacés les uns des autres dans la direction périphérique de la douille de guidage (12) et s'étendent parallèlement les uns aux autres, et dans lesquels s'étendent des prolongements axiaux (56) de type bande de la garniture d'étanchéité (17).

4. Pièce d'appui selon la revendication 3, **caractérisée en ce que** les prolongements axiaux (56) en forme de bande sont reliés d'une seule pièce, dans leur zone d'extrémité opposée à la garniture d'étanchéité (17) de forme annulaire, à un corps annulaire (57) coaxial à la garniture d'étanchéité (17), les prolongements axiaux (56) s'étendant à la manière d'entretoises entre la garniture d'étanchéité (17) et le corps annulaire (57), et le corps annulaire (57) passant derrière une ou plusieurs saillies radiales de la douille de guidage (12), lesquelles sont avantageusement formées par les nervures longitudinales (55), disposées entre des renfoncements de réception (54) voisins, de la douille de guidage (12).

5. Pièce d'appui selon l'une des revendications 1 à 4, **caractérisée en ce que** la douille de guidage dispose, dans la zone de son pourtour extérieur, de moyens de compensation en un matériau présentant l'élasticité du caoutchouc, qui, lorsque la pièce d'appui est installée, provoquent une suspension élastiquement souple, transversalement à l'axe longitudinal (7) du passage de boîtier (6), de la douille de guidage (12).

6. Pièce d'appui selon la revendication 5, **caractérisée en ce que** les moyens de compensation sont formés au moins en partie par des bandes de compensation allongées qui sont prévues en grand nombre et sont réparties sur le pourtour de la douille de guidage (12).

7. Pièce d'appui selon la revendication 6, **caractérisée en ce que** les bandes de compensation sont formées par les prolongements axiaux (56) de type bande de la garniture d'étanchéité (17).

8. Pièce d'appui selon l'une des revendications 1 à 7, **caractérisée en ce que** la garniture d'étanchéité (17) est une étanchéité à lèvres qui dispose d'une lèvre d'étanchéité intérieure (22) prévue pour coopérer avec la tige de piston (4), et d'une lèvre d'étanchéité extérieure (24) coaxiale à la première, prévue pour coopérer avec le boîtier (2) du vérin (1).

9. Pièce d'appui selon l'une des revendications 1 à 8, **caractérisée en ce que** les saillies de fixation (45) sont réalisées comme partie constitutive d'un seul tenant de la douille de guidage (12).

10. Pièce d'appui selon l'une des revendications 1 à 9, **caractérisée en ce que** les moyens de fixation (35) disposent de moyens de sûreté (46) servant à bloquer la position de rotation de la pièce d'appui (8) installée, lesquels peuvent coopérer de préférence à force avec le boîtier (2) du vérin (1).

11. Pièce d'appui selon l'une des revendications 1 à 10, **caractérisée en ce que** tous les composants sont reliés entre eux par adhérence de matière et en particulier formés les uns contre les autres par moulage par injection.

12. Pièce d'appui selon l'une des revendications 1 à 11, **caractérisée en ce que** la douille de guidage (12), la garniture d'étanchéité (17) et la racle (14) sont constituées de matériaux différents, adaptés dans chaque cas à la tâche à accomplir, la pièce d'appui (8) étant avantageusement réalisée comme pièce moulée par injection à trois composants.

13. Pièce d'appui selon l'une des revendications 1 à 12, **caractérisée en ce que** la douille de guidage (12) est constituée d'un mélange de bronze et de matière plastique ou d'une matière plastique dure.

14. Vérin comportant un boîtier (2) et une tige de piston (4) traversant un passage de boîtier (6), une pièce d'appui (8) de type manchon selon l'une des revendications 1 à 13, enfermant coaxialement la tige de piston (4), étant disposée dans le passage de boîtier (6).
